# EUROPÄISCHE PATENTSCHRIFT

(11) **EP 1 732 838 B1**
(45) Veröffentlichungstag und Bekanntmachung des Hinweises auf die Patenterteilung: **22.07.2009**
(21) Anmeldenummer: 05715577.2
(22) Anmeldetag: 26.02.2005
(51) Int. Cl.: B66C 1/04, H01F 7/02

(54) **VORRICHTUNG ZUM MAGNETISCHEN ERGREIFEN VON WERKSTÜCKEN UND VERFAHREN ZUM BETREIBEN EINER DERARTIGEN VORRICHTUNG**
DEVICE FOR MAGNETICALLY SEIZING WORKPIECES AND METHOD FOR OPERATING SAID DEVICE
DISPOSITIF POUR DIMENSIONNER DE MANIERE MAGNETIQUE DES PIECES A USINER ET PROCEDE POUR FAIRE FONCTIONNER LEDIT DISPOSITIF

(30) Priorität: 22.03.2004 DE 102004014636
(43) Veröffentlichungstag der Anmeldung: 20.12.2006
(73) Patentinhaber: J. Schmalz GmbH, 72293 Glatten (DE); TRUMPF Werkzeugmaschinen GmbH + Co. KG, 71254 Ditzingen (DE)
(72) Erfinder: SCHMALZ, Kurt, 72280 Dornstetten (DE); EISELE, Thomas, 78737 Fluorn-Winzeln (DE); RACK, Alexander, 72250 Freudenstadt-Dietersweiler (DE); THIEL, Walter, 70327 Stuttgart (DE)
(74) Vertreter: Dreiss
(86) Internationale Anmeldenummer: PCT/EP2005/002056
(87) Internationale Veröffentlichungsnummer: WO 2005/095254

(56) Entgegenhaltungen:
- DE-B- 1 200 498
- DE-C2- 19 951 703
- US-A- 3 009 727
- US-A- 4 121 865
- US-A- 4 504 088
- US-B1- 6 538 544

## Beschreibung

Die Erfindung betrifft eine Vorrichtung zum magnetischen Ergreifen von Werkstücken mit den Merkmalen des Oberbegriffs des Anspruchs 1.

Es ist bekannt, Werkstücke mittels eines Sauggreifers anzusaugen, so dass sie manipuliert werden können. Insbesondere bei Werkstücken mit nicht geschlossener Oberfläche kann dies zu Problemen führen, da durch die Durchbrüche Luft angesagt werden und deshalb kein oder nur ein ungenügendes Vakuum erzeugt werden kann.

Aus der DE-C-1 200 498 ist eine Hebevorrichtung mit Hebemagnet und Saugnapf bekannt, die starr miteinander verbunden sind. Aus der DE-C-199 51 703 ist eine Vorrichtung bekannt, bei der in einem Gehäuse ein Kolben mit einem Magnet pneumatisch bewegt wird. Hierfür wird der Kolben abwechselnd an seinen Kolbenflächen mit Druckmedium beaufschlagt. In diese von den Kolbenflächen begrenzten Zylinderräume münden Druckleitungen, über welche das Druckmedium zugeführt wird. Die Ausgestaltung der Vorrichtung mit zwei Zylinderräumen und die Anordnung von zwei Druckleitungen ist aufwändig und verursacht hohe Herstellungskosten. Bei der US-A-6,538,544 wird eine Druckleitung eingespart, indem der Kolben mittels einer Feder in die Arbeitsstellung zurück verschoben wird.

Der Erfindung liegt daher die Aufgabe zugrunde, eine Vorrichtung und/oder ein Verfahren zu schaffen, mit dem Werkstücke mit nicht geschlossene Oberfläche zuverlässig gehandhabt werden können, wobei die Vorrichtung einfach und preiswert herstellbar ist.

Diese Aufgabe wird mit einer Vorrichtung gelöst, die die Merkmale des Anspruchs 1 aufweist.

Bei der erfindungsgemäßen Vorrichtung ist ein Gehäuse, ein im Gehäuse beweglich gelagerten Magnet und ein Antrieb für den Magnet vorgesehen, um den Magnet hin zur und weg von einer Innenseite einer Trennwand zu bewegen, wobei die Trennwand den Gehäuseinnenraum vom anliegenden Werkstück trennt und der Antrieb ein pneumatischer Antrieb ist.

Durch das Merkmal, dass einer der Druckräume mit der Umgebung verbunden ist, wird der Umgebungsdruck als antreibendes Mittel genutzt, wenn im anderen Druckraum ein Unterdruck angelegt wird.

Auf diese Weise können problemlos Stahlbleche, insbesondere auch solche mit nicht geschlossener Oberfläche, mit Hilfe von Magnetismus aufgenommen und abgelegt werden. Sollte das Vakuum nicht ausreichen, dann wird die Haltekraft von der Magnetkraft ausreichend unterstützt. Zusätzlich zur Magnetkraft können Teile mit geschlossener Oberfläche durch Vakuum aufgenommen und abgelegt werden. Dieses Vakuum kann bei Verwendung eines Ejektors mittels Druckluft erzeugt werden.

Der Magnet kann entweder mittels Unterdruck oder mittels Überdruck angetrieben, d.h. innerhalb des Gehäuses verlagert werden. Hierfür ist er an einem Faltenbalg oder an einer Membran aufgehängt. Dies hat den wesentlichen Vorteil, dass er reibungsfrei verschoben werden kann. Die Lagerung des Magneten nach Art eines Kolbens bedingt immer eine gewisses Reibung an der Umfangsfläche, die von den durch den Unter-oder Überdruck erzeugten Antriebskräften überwunden werden muss.

Vorteilhaft ist am oder im Gehäuse ein Ejektor vorgesehen, mit dem der erforderliche Unterdruck erzeugt wird. Es muss dann lediglich eine Druckleitung zum Gehäuse hin geführt werden.

Um Werkstücke zusätzlich mit Unterdruck ergreifen zu können, ist an der Außenseite der Trennwand eine geschlossene Dichtlippe vorgesehen, die einen Saugraum umschließt, wobei der Gehäuseinnenraum über einen in der Trennwand vorgesehenen Kanal in diesen Saugraum mündet. Mit Vorzug ist im Kanal ein Ventil vorgesehen, das insbesondere dicht schließend, z.B. als Strömungsventil ausgeführt ist. Sollte an der Trennwand kein Werkstück anliegen, dann verschließt dieses Ventil den Kanal, so dass keine Luft in den Gehäuseinnenraum strömt. Das Ventil kann von außen ansteuerbar sein. Die Steuersignale können z.B. von einem Vakuumsensor bereit gestellt werden. Das Ventil ist dann ein aktives Ventil.

Eine Weiterbildung sieht vor, dass die Entfernung des Magnet zur Innenseite der Trennwand manuell oder automatisch einstellbar ist. Die manuelle Einstellung erfolgt z.B. über eine Einstellschraube, die den Magnet auf Abstand hält. Die automatische Einstellung erfolgt z.B. über eine zusätzliche Verschiebevorrichtung, die zwischen der Trennwand und dem Magnet vorgesehen ist. Diese Verschiebevorrichtung, z.B. in Form eines Kolbens oder Kissens, kann mit Druckluft verschoben oder aufgeblasen werden und hält den Magnet auf Abstand zur Trennwand. Hierdurch wird die Magnetkraft exakt eingestellt und verhindert, dass mehrere Werkstücke, insbesondere Stahlplatten gleichzeitig angezogen werden.

Eine Weiterbildung sieht vor, dass die Trennwand flexibel, insbesondere aus Kunststoff oder Gummi ist. Hierdurch besteht die Möglichkeit, die Trennwand nach außen auszuwölben, wodurch das angesaugte Werkstück zum Ablegen leichter abgelöst und abgeworfen werden kann.

Eine Variante sieht vor, dass auf der Außenseite der Trennwand ein insbesondere aufblasbares Druckkissen vorgesehen ist. Mit diesem Druckkissen kann ein angesaugtes Werkstück einfach von der Trennwand abgehoben werden. Eventuell noch vorhandene Magnetkräfte werden dabei überwunden. Um das Druckkissen schnell aktivieren zu können, ist dieses mit einer Druckleitung verbunden.

Weitere Vorteile, Merkmale und Einzelheiten der Erfindung ergeben sich aus den Ansprüchen sowie der nachfolgenden Beschreibung, in der unter Bezugnahme auf die Zeichnung einzelne Ausführungsbeispiele im Detail beschrieben sind. Dabei können die in der Zeichnung sowie von den Ansprüchen und in der Beschreibung erwähnten Merkmale jeweils einzeln für sich oder in beliebiger Kombination erfindungswesentlich sein.

Dabei zeigen:
- Figur 1: eine Seitenansicht der erfindungsgemäßen Vorrichtung;
- Figur 2: eine Draufsicht in Richtung des Pfeils II;
- Figur 3: einen Schnitt III - III gemäß Figur 2;
- Figur 4: eine vergrößerte Wiedergabe eines Längsschnittes gemäß Figur 3 mit an der Trennwand befestigter Dichtlippe;
- Figur 5: eine schematische Darstellung eines Gehäuses mit integriertem Ejektor;
- Figur 6: ein schematischer Längsschnitt durch das Gehäuse mit automatischer Abstandseinstellung des Magnetelements zur Trennwand;
- Figur 7: ein schematischer Längsschnitt durch das Gehäuse mit statischer Abstandseinstellung des Magnetelements zur Trennwand;
- Figur 8: ein schematischer Längsschnitt durch das Gehäuse mit flexibler Trennwand; und
- Figur 9: ein schematischer Längsschnitt durch das Gehäuse mit einer an der Trennwand befestigten Gummiblase.

Im Inneren eines vakuumdichten Gehäuses 10 ist ein Magnetelement 12 vorgesehen. Das Gehäuse 10 ist zylinderförmig ausgebildet und besitzt eine Trennwand 14 mit einer Innenseite 16 und einer Außenseite 18. Die andere Stirnseite des Gehäuses 10 ist mittels eines Deckels 20, insbesondere eines Schraubdeckels gasdicht verschlossen. An der Innenseite des Deckels 20 ist ein Faltenbalg 22 fixiert, dessen Längsachse und Ausdehnungsrichtung hin zur Trennwand 14 weist. Die der Trennwand 14 zugewandte Seite des Faltenbalgs 22 ist vom Magnetelement 12 verschlossen, so dass innerhalb des Faltenbalgs 22 ein erster Druckraum 24 entsteht. Dieser erste Druckraum 24 ist über einen ersten Kanal 26 im Deckel 20 mit der Umgebung verbunden. Zwischen dem Faltenbalg 22 und der Innenwand des Gehäuses 10 befindet sich ein zweiter Druckraum 28, der über einen zweiten Kanal 30 mit einer nicht dargestellten Saugvorrichtung verbunden ist.

Wird über den zweiten Kanal 30 der zweite Druckraum 28 mit Unterdruck versorgt, dann dehnt sich der Faltenbalg 22 aus und das Magnetelement 12 wird zur Innenseite 16 der Trennwand 14 hin bewegt. Dies kann auch dadurch erfolgen, dass über den ersten Kanal 26 ein Überdruck in den ersten Druckraum 24 eingeleitet wird.

Da das Magnetelement 12 an der Trennwand 14 anliegt, kann mittels der Magnetkraft ein Werkstück an die Außenseite 18 der Trennwand 14 angezogen werden. Das Werkstück kann nun angehoben und manipuliert werden. Durch Abbau des Unterdrucks in der zweiten Druckkammer 28 und/oder des Überdruckes in der ersten Druckkammer 24 wird das Werkstück wieder freigegeben. Es kann abgelegt werden. Von Vorteil ist, dass keine magnetischen Späne am Gehäuse 10 anhaften, da das Magnetelement 12 im Inneren des Gehäuses 10 von der Trennwand 14 wegfährt und die nach außen wirkende Magnetkraft somit erlischt.

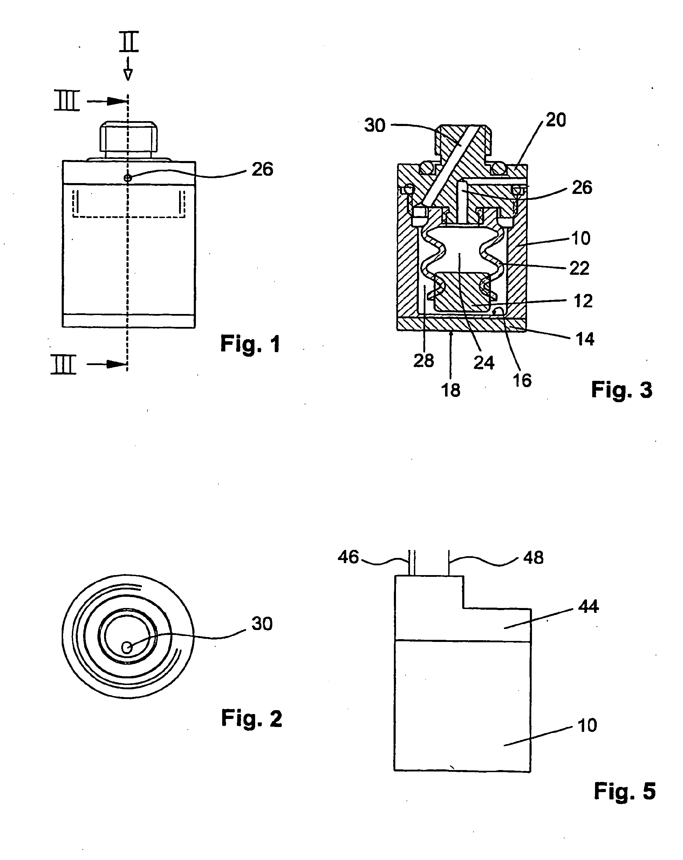

Das Magnetelement 12 bewegt sich im Inneren des Gehäuses 10 ohne Reibung, somit ist nur ein geringer Druckunterschied zum Bewegen des Magnetelements 12 nötig. Die Abdichtung des Magnetelements 12 zum Gehäuse 10 erfolgt in der Figur 3 über einen Faltenbalg 22. Alternativ kann auch eine Membran verwendet werden. Es müssen nur die beiden Druckräume 24 und 28 voneinander getrennt werden.

Es wird bei diesem Vorgang nahezu kein Vakuum bzw. keine Druckluft verbraucht, da das Vakuum bzw. der Druck nur statisch wirkt und nur zum Bewegen des Magnetelements 12 benötigt wird.

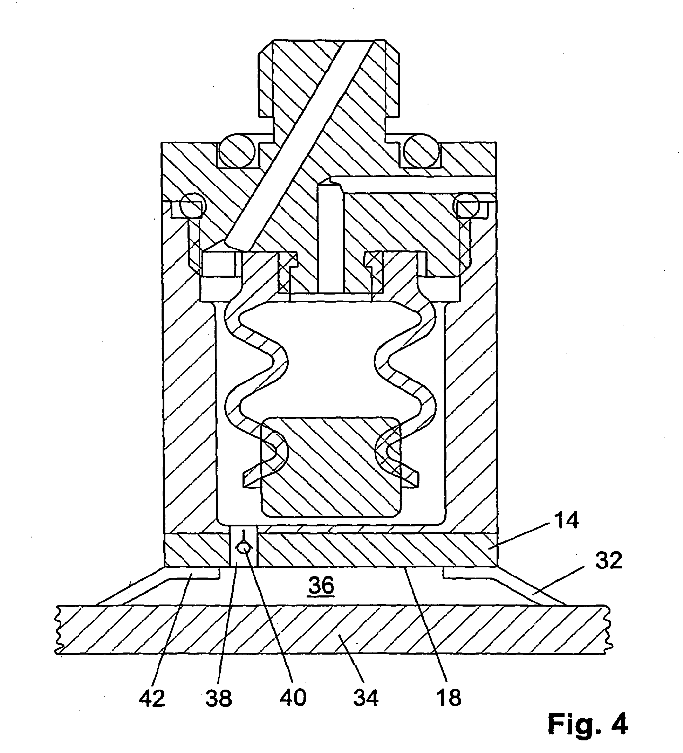

Die Figur 4 zeigt eine Variante, bei der an der Außenseite 18 der Trennwand 14 eine umlaufende Dichtlippe 32 angebracht ist, die an der Oberseite des Werkstücks 34 zu liegen kommt. Die Dichtlippe 32 umschließt einen Saugraum 36, der über einen Kanal 38 mit dem zweiten Druckraum 28 verbunden ist. Im Kanal 38 befindet sich ein Strömungsventil 40, das den Kanal 38 bei nicht anliegendem Werkstück 34 verschließt. Auf diese Weise wird das Werkstück nicht nur mit Magnetkraft sondern auch durch Unterdruck gehalten. Da der Kanal 38 einen relativ engen Querschnitt besitzt und dadurch einen Strömungswiderstand darstellt, wird nahezu kein Vakuum bzw. keine Druckluft verbraucht.

Das Steuermedium ist vorzugsweise Luft, es kann aber auch ein Gas oder eine Flüssigkeit sein.

Das Magnetelement 12 kann aus einem einzelnen Magneten oder aber aus mehrerer kleinen Magnetelementen bestehen. Es ist auch möglich, dass mehrere Magnete so angeordnet sind, dass sie ineinander geschoben werden können und sich dabei ihre Magnetkräfte aufheben, und wenn sie auseinander gezogen werden, die Magnetkräfte eines Teils der Magnete wirksam sind.

Eine Variante sieht vor, dass bistabile Anordnungen mit Magnetelementen 12 vorgesehen sind. Bei Ausfall des Steuersignals oder Vakuums behält das Magnetelement 12 seine letzte Position bei. Somit können z.B. bei Vakuumausfall keine Teile verloren werden, bzw. bei Druckausfall kann es nicht zu unbeabsichtigtem Greifen von Teilen kommen.

Die Übertragung von Querkräften erfolgt durch Ringe oder Scheiben 42 aus geeignetem Material mit entsprechendem Reibwert, die an der Außenseite 18 der Trennwand 14 angebracht bzw. in diese integriert werden können. Sie bestehen z.B. Gummi oder PA. Alternativ kann die Scheibe 42 mit einer Dichtlippe 32 kombiniert werden (z.B. anvulkanisiert), um die magnetische Haltekraft mit einer Haltekraft durch Vakuum eines Vakuumsauggreifers zu kombinieren.

Alternativ kann zum Abwerfen des Werkstücks 34 auch aktiv Abgeblasen werden, wie es bei Vakuumsauggreifern möglich ist. Dies ist beim reinen Magnetgreifer aber auch beim kombinierten Greifer möglich.

Mit der kombinierten Dichtlippe 32 sind extrem hohe Haltekräfte bei magnetischen Teilen durch Überlagerung von magnetischer Haltekraft und Haltekraft durch das auf das Teil wirkende Vakuum möglich.

Eine Ausführung sieht vor, dass die Vakuumerzeugung direkt im oder am Gehäuse 10 mittels eines Ejektors 44 erfolgt. Der Ejektor 44 benötigt lediglich eine Druckleitung 46 und gegebenenfalls eine Steuerleitung 48. Alternativ ist z.B. durch Druckänderung (niedriger Druck und höherer Druck) nur ein Anschluss für die Druckluft nötig.

Bei der Ausführung mit Dichtlippe 32 besteht die Möglichkeit, statt mit einem gemeinsamen Sauganschluss alternativ je einen An schluss für magnetisches und Vakuumgreifen vorzusehen.

Alternativ ist durch Einsatz von Pilotventilen ein getrenntes Ansteuern der beiden Greifarten bei nur einem Schlauchanschluss und zusätzlichem elektrischen Anschluss möglich.

Alle Teile, die auf magnetische Kräfte ansprechen und/oder eine geschlossene Oberfläche haben können gegriffen und gehalten werden. Dies sind insbesondere Stahlbleche in allen Arten: roh, verzundert, gebeizt, verzinkt, vernickelt, (folien-) beschichtet. Außerdem sind Teile deren Oberfläche geschlossen oder nicht geschlossen, eben oder strukturiert, sind, handhabbar.

Die Anbindung des Gehäuses 10 an eine Halterung ist mit einem (gefedertem) Höhenausgleich und/oder Winkelausgleich möglich.

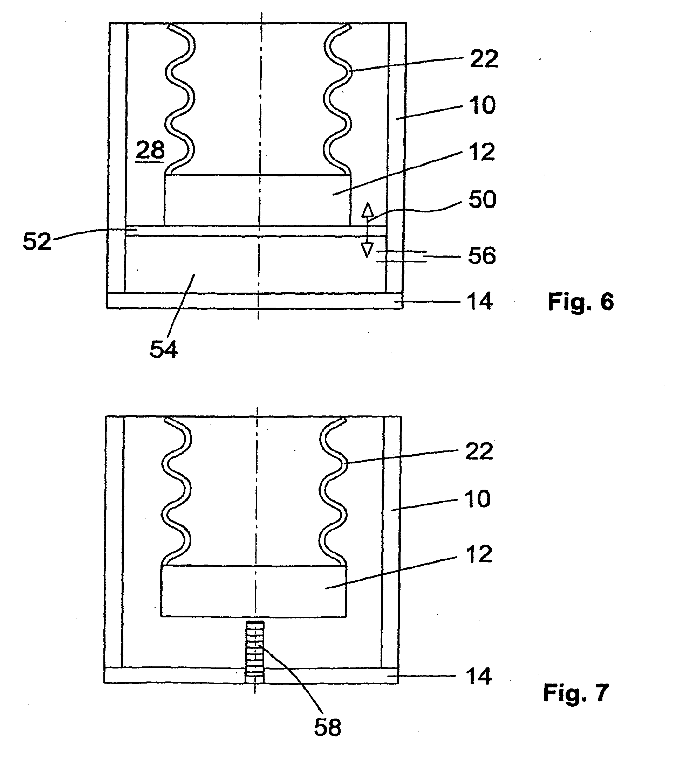

Die Figur 6 zeigt ein Gehäuse 10, dessen zweiter Druckraum 28 über eine in Richtung des Doppelpfeils 50 verschiebbare Wand 52 nach unten abgeschlossen ist. Das Magnetelement 12 sitzt auf dieser Wand 52 auf und wird von dieser auf Abstand zur Trennwand 14 gehalten. Der Raum 54 zwischen der Trennwand 14 und der Wand 52 kann über eine Druckleitung 56 mit Druckluft versorgt werden, wodurch die Wand in ihrer Position in Richtung des Doppelpfeils 50 verschoben werden kann. Dadurch kann die auf das Werkstück 34 einwirkende Magnetkraft eingestellt und das gleichzeitige Aufnehmen von zwei oder mehr Werkstücken 34 vermieden werden.

Beim Ausführungsbeispiel der Figur 7 ist in die Trennwand eine Stellschraube 58 fluiddicht eingeschraubt, über die der Abstand des Magnetelements 12 zur Trennwand 14 vorgegeben werden kann.

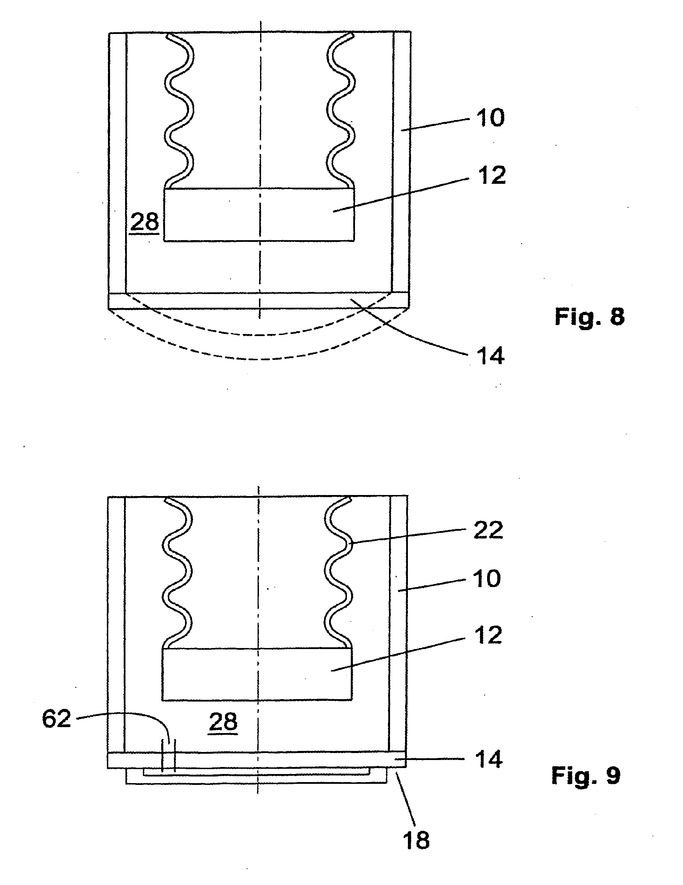

Die Figur 8 zeigt ein Gehäuse 10, bei dem die Trennwand 14 aus einem flexiblen Material, insbesondere aus Gummi besteht. Herrscht bei diesem Ausführungsbeispiel zum Abwerfen des Werkstückes 34 im zweiten Druckraum 28 ein Überdruck, dann wölbt sich die Trennwand 14, wie mit gestrichelten Linien angedeutet, nach außen, so dass das Werkstück nicht mehr plan anliegt und außerdem noch weiter vom Magnetelement 12 entfernt wird.

Bei der Ausführungsform der Figur 9 ist an der Außenseite 18 der Trennwand 14 eine Gummiblase 60 befestigt, die über einen Kanal 62, der mit dem zweiten Druckraum 28 in Verbindung steht, oder der separat mit Druckluft versorgt werden kann, aufgeblasen wird. Dabei wölbt sich die Gummiblase 60 nach außen, d.h. weg von der Trennwand 14, wodurch das Abwerfen des Werkstücks 34 beschleunigt wird.

Der Begriff "Vakuum" wurde generell mit der Bedeutung "Unterdruck" verwendet und ist somit nicht nur auf Unterdruck von Luft begrenzt sondern in Bezug auf alle gasförmige bzw. flüssige Medien. Analog wurde der Begriff "Druckluft" stellvertretend für "Überdruck" verwendet. Analog wurde der Begriff "Abblasen" mit der Bedeutung "Ausströmen des Mediums mit Überdruck" verwendet, wobei ebenfalls alle gasförmigen bzw. flüssigen Medien in Betracht kommen.

## Patentansprüche

1. Vorrichtung zum magnetischen Ergreifen von Werkstücken, mit einem Gehäuse (10), einem im Gehäuse (10) beweglich gelagerten Magnetelement (12), einem Antrieb für das Magnetelement (12), um das Magnetelement (12) hin zur und weg von einer Innenseite (16) einer Trennwand (14) zu bewegen, wobei die Trennwand (14) den Gehäuseinnenraum von einem anliegenden Werkstück (34) trennt und der Antrieb ein pneumatischer Antrieb ist, wobei ein erster Druckraum (24) und ein zweiter Druckraum (28) vorgesehen sind, **dadurch gekennzeichnet, dass** der erste Druckraum (24) mit der Umgebung und der zweite Druckraum (28) mit einer Saugvorrichtung oder Blasvorrichtung verbunden ist und dass der Antrieb ein ein Faltenbalg (2.2) oder eine druckbetätigbare Membran ist, an dem bzw. der das Magnetelement (12) befestigt ist und dessen Länge bzw. deren Lage mittels Unterdruck veränderbar ist.

2. Vorrichtung nach Anspruch 1, **dadurch gekennzeichnet, dass** im Faltenbalg (22) Umgebungsdruck herrscht.

3. Vorrichtung nach Anspruch 1, **dadurch gekennzeichnet, dass** außerhalb des Faltenbalgs (22) Unterdruck herrscht.

4. Vorrichtung nach einem der vorhergehenden Ansprüche, **dadurch gekennzeichnet, dass** die nicht an den Unterdruck angeschlossene Seite des Faltenbalgs (22) mit der Umgebung verbunden ist.

5. Vorrichtung nach einem der vorhergehenden Ansprüche, **dadurch gekennzeichnet, dass** das Gehäuse (10) hülsenförmig ist und eine Stirnseite die Trennwand (14) bildet.

6. Vorrichtung nach einem der vorhergehenden Ansprüche, **dadurch gekennzeichnet, dass** das Magnetelement (12) zylinderförmig ist und in der Längsachse des Gehäuses (10) und orthogonal zum Werkstück (34) beweglich gelagert ist.

7. Vorrichtung nach einem der vorhergehenden Ansprüche, **dadurch gekennzeichnet, dass** das Gehäuse (10) topfförmig ist und einen Deckel (20), insbesondere einen Schraubdeckel, aufweist.

8. Vorrichtung nach Anspruch 7, **dadurch gekennzeichnet, dass** am Deckel (20) der Antrieb befestigt ist.

9. Vorrichtung nach einem der vorhergehenden Ansprüche, **dadurch gekennzeichnet, dass** das Magnetelement (12) ein Dauermagnet oder ein Elektromagnet ist.

10. Vorrichtung nach einem der vorhergehenden Ansprüche, **dadurch gekennzeichnet, dass** dem Gehäuse (10) ein Ejektor (44) zum Erzeugen eines Unterdruckes zugeordnet, insbesondere mit dem Gehäuseinnenraum strömungsverbunden ist.

11. Vorrichtung nach Anspruch 10, **dadurch gekennzeichnet, dass** der Ejektor (44) in das Gehäuse (10) integriert ist.

12. Vorrichtung nach einem der vorhergehenden Ansprüche, **dadurch gekennzeichnet, dass** an der Außenseite (18) der Trennwand (14) eine geschlossene Dichtlippe (32) vorgesehen ist und einen Saugraum (36) umschließt und der Gehäuseinnenraum über einen in der Trennwand (14) vorgesehenen Kanal (38) in diesen Saugraum (36) mündet.

13. Vorrichtung nach Anspruch 12, **dadurch gekennzeichnet, dass** im Kanal (38) ein Ventil (40) vorgesehen ist.

14. Vorrichtung nach Anspruch 13, **dadurch gekennzeichnet, dass** das Ventil (40) ein dicht schließendes, insbesondere ein Strömungsventil ist.

15. Vorrichtung nach einem der vorhergehenden Ansprüche, **dadurch gekennzeichnet, dass** die Entfernung des Magnetelements (12) zur Innenseite (16) der Trennwand (14) manuell oder automatisch einstellbar ist.

16. Vorrichtung nach einem der vorhergehenden Ansprüche, **dadurch gekennzeichnet, dass** die Trennwand (14) flexibel, insbesondere aus Kunststoff oder Gummi ausgebildet ist.

17. Vorrichtung nach einem der vorhergehenden Ansprüche, **dadurch gekennzeichnet, dass** auf der Außenseite der Trennwand (14) ein insbesondere aufblasbares Druckkissen vorgesehen ist.

18. Vorrichtung nach Anspruch 17, **dadurch gekennzeichnet, dass** das Druckkissen mit einer Druckleitung verbunden ist.

19. Vorrichtung nach einem der vorhergehenden Ansprüche, **dadurch gekennzeichnet, dass** das Magnetelement (12) bistabil ist.

## Claims

1. A device for magnetically seizing workpieces, having a housing (10), a magnetic element (12), which is movably seated in the housing (10), a drive mechanism for the magnetic element (12) for moving the magnetic element (12) toward and away from an inside (16) of a separating wall (14), wherein the separating wall (14) separates the interior housing chamber from an adjacent workpiece (34), and the drive mechanism is a pneumatic drive mechanism, wherein a first pressure chamber (24) and a second pressure chamber (28) are provided, **characterized in that** the first pressure chamber (24) is connected with the surroundings, and the second pressure chamber (28) with a suction device or a blowing device, and that the drive mechanism is a folding bellows (22) or a diaphragm, which can be pressure-operated, on which the magnetic element (12) is fastened, and whose length, or respectively position, can be changed by means of underpressure.

2. The device in accordance with claim 1, **characterized in that** ambient pressure prevails inside the folding bellows (22).

3. The device in accordance with claim 1, **characterized in that** underpressure prevails outside the folding bellows (22).

4. The device in accordance with one of the preceding claims, **characterized in that** the side of the folding bellows (22) which is not connected to the underpressure is connected with the surroundings.

5. The device in accordance with one of the preceding claims, **characterized in that** the housing (10) is sleeve-shaped and constitutes a front face of the separating wall (14).

6. The device in accordance with one of the preceding claims, **characterized in that** the magnetic element (12) is cylinder- shaped and is movably seated in the longitudinal axis of the housing (10) and orthogonally in relation to the workpiece (34).

7. The device in accordance with one of the preceding claims, **characterized in that** the housing (10) is cup-shaped and has a cover (20), in particular a screwtop.

8. The device in accordance with claim 7, **characterized in that** the drive mechanism is fastened on the cover (20).

9. The device in accordance with one of the preceding claims, **characterized in that** the magnetic element (12) is a permanent magnet or an electromagnet.

10. The device in accordance with one of the preceding claims, **characterized in that** an ejector (44) for generating underpressure is assigned to the housing (10) and is in particular flow-connected with the interior housing space.

11. The device in accordance with claim 10, **characterized in that** the ejector (44) is integrated into the housing (10).

12. The device in accordance with one of the preceding claims, **characterized in that** a closed sealing lip (32) is provided on the exterior (18) of the separating wall (14) and encloses a suction chamber (36), and the interior housing chamber terminates into this suction chamber (36) through a channel (38) provided in the separating wall (14).

13. The device in accordance with claim 12, **characterized in that** a valve (40) is provided in the channel (38).

14. The device in accordance with claim 13, **characterized in that** the valve (40) is a tightly closing one, in particular a flow valve.

15. The device in accordance with one of the preceding claims, **characterized in that** the distance of the magnetic element (12) from the inside (16) of the separating wall (14) can be set manually or automatically.

16. The device in accordance with one of the preceding claims, **characterized in that** the separating wall (14) is designed to be flexible, in particular made of plastic or rubber.

17. The device in accordance with one of the preceding claims, **characterized in that** a pressure cushion, in particular an inflatable one, is provided on the exterior of the separating wall (14).

18. The device in accordance with claim 17, **characterized in that** the pressure cushion is connected with a pressure line.

19. The device in accordance with one of the preceding claims, **characterized in that** the magnetic element (12) is bistable.

## Revendications

1. Dispositif pour saisir magnétiquement des pièces à travailler, comprenant un boîtier (10), un élément magnétique (12) logé de façon mobile dans le boîtier (10), un dispositif d'entraînement pour l'élément magnétique (12) afin d'approcher et d'éloigner l'élément magnétique (12) d'un côté intérieur (16) d'une cloison (14), dans lequel la cloison (14) sépare l'intérieur de boîtier d'une pièce à travailler adjacente (34) et le dispositif d'entraînement est un dispositif d'entraînement pneumatique, dans lequel une première chambre de pression (24) et une deuxième chambre de pression (28) sont prévues, **caractérisé en ce que en ce que** la première chambre de pression (24) est reliée à l'environnement et la deuxième chambre de pression (28) est reliée à un dispositif d'aspiration ou à un dispositif de soufflage, et **en ce que** le dispositif d'entraînement est un soufflet (22) ou une membrane actionnée par pression, sur lequel ou laquelle est fixé l'élément magnétique (12) et dont la longueur peut être modifiée au moyen d'une dépression.

2. Dispositif selon la revendication 1, **caractérisé en ce que** dans le soufflet (22), il règne la pression ambiante.

3. Dispositif selon la revendication 1, **caractérisé en ce qu'**en dehors du soufflet (22), il règne une dépression.

4. Dispositif selon l'une quelconque des revendications précédentes, **caractérisé en ce que** le côté du soufflet (22) non raccordé à la dépression est raccordé à l'environnement.

5. Dispositif selon l'une quelconque des revendications précédentes, **caractérisé en ce que** le boîtier (10) est en forme de douille et un côté frontal forme la cloison (14).

6. Dispositif selon l'une quelconque des revendications précédentes, **caractérisé en ce que** l'élément magnétique (12) est cylindrique et est logé dans l'axe longitudinal du boîtier (10) et de façon mobile orthogonalement à la pièce à travailler (34).

7. Dispositif selon l'une quelconque des revendications précédentes, **caractérisé en ce que** le boîtier (10) est en forme de pot et présente un couvercle (20), en particulier un couvercle à visser.

8. Dispositif selon la revendication 7, **caractérisé en ce que** sur le couvercle (20), le dispositif d'entraînement est fixé.

9. Dispositif selon l'une quelconque des revendications précédentes, **caractérisé en ce que** l'élément magnétique (12) est un aimant permanent ou un électroaimant.

10. Dispositif selon l'une quelconque des revendications précédentes, **caractérisé en ce que** le boîtier (10) se voit attribuer un éjecteur (44) pour générer une dépression qui est en particulier en communication fluidique avec l'intérieur de boîtier.

11. Dispositif selon la revendication 10, **caractérisé en ce que** l'éjecteur (44) est intégré dans le boîtier (10).

12. Dispositif selon l'une quelconque des revendications précédentes, **caractérisé en ce que** sur le côté extérieur (18) de la cloison (14), une lèvre d'étanchéité fermée (32) est prévue et entoure un espace d'aspiration (36) et l'intérieur de boîtier débouche sur cet espace d'aspiration (36) par l'intermédiaire d'un canal (38) prévu dans la cloison (14).

13. Dispositif selon la revendication 12, **caractérisé en ce que** dans le canal (38), une soupape (40) est prévue.

14. Dispositif selon la revendication 13, **caractérisé en ce que** la soupape (40) est une soupape étanche, en particulier un régulateur de débit.

15. Dispositif selon l'une quelconque des revendications précédentes, **caractérisé en ce que** la distance entre l'élément magnétique (12) et le côté intérieur (16) de la cloison (14) peut être réglée manuellement ou automatiquement.

16. Dispositif selon l'une quelconque des revendications précédentes, **caractérisé en ce que** la cloison (14) est flexible, en particulier réalisée en matière plastique ou en caoutchouc.

17. Dispositif selon l'une quelconque des revendications précédentes, **caractérisé en ce que** sur le côté extérieur de la cloison (14), un coussin de pression gonflable est prévu.

18. Dispositif selon la revendication 17, **caractérisé en ce que** le coussin de pression gonflable est relié à une conduite de refoulement.

19. Dispositif selon l'une quelconque des revendications précédentes, **caractérisé en ce que** l'élément magnétique (12) est bistable.
